Europäisches Patentamt

European Patent Office

Office européen des brevets

(11) Publication number: **0 312 380**
**A1**

# (12) EUROPEAN PATENT APPLICATION

(21) Application number: **88309639.8**

(22) Date of filing: **14.10.88**

(51) Int. Cl.⁴: **A 01 K 97/12**

(30) Priority: **16.10.87 GB 8724337**

(43) Date of publication of application:
**19.04.89 Bulletin 89/16**

(84) Designated Contracting States:
**AT BE CH DE FR IT LI LU NL**

(71) Applicant: **Skilton, David Charles**
**106 The Greenway Hurst Green**
**Oxted Surrey (GB)**

(72) Inventor: **Skilton, David Charles**
**106 The Greenway Hurst Green**
**Oxted Surrey (GB)**

(74) Representative: **Fry, Alan Valentine**
**FRY HEATH & CO. Seloduct House Station Road**
**Redhill Surrey RH1 1NF (GB)**

(54) Apparatus for use in fishing.

(57) A bite indicator for a fishing line (5) of a fishing rod (4), the indicator comprising a rotatable member (10, 32) positioned towards the base of a recess (3) within which a rod (4) is to be supported such that, in use, the rotatable member (10, 32) lies in contact with, and is driven by, the line (5) of a rod (4) supported within the recess (3), the rotatable member (10, 32) being mounted on a spindle (7) which also carries an indicator to provide, on rotation of the member (8), a visual indication of line movement and the rate thereof.

FIG.1

**Description**

## Apparatus for use in Fishing

This invention relates to apparatus for use in fishing. More particularly, but not exclusively, the invention concerns bite indicators for use by anglers which provide a visual indication of the rate of line travel following a bait being taken by a fish.

The invention also concerns a fishing line tensioning device for use in association with, or separate from, a bite indicator.

Bite indicators are used in rod and line fishing to alert an angler to the fact that a bait has been taken by a fish so that the strike can be timed correctly.

GB 1503596 discloses a bite indicator which includes a freely rotatable pulley wheel so positioned on a rod support that the fishing line of the rod passes at least partially around the pulley wheel to cause the same to rotate if linear movement of the fishing line occurs. The pulley wheel is connected through a spindle to an apertured disc on each side of light emissive and light sensitive photo-electric cells, rotation of the apertured disc causing the light sensitive cell to transmit electrical signals to one or more lights and sounding devices.

Bite indicators such as disclosed by GB 1503596 are expensive to manufacture and suffer from the disadvantage that care has to be exercised to ensure that the electrical circuit and photo-electric cells remain dry.

Alternative constructions of bite indicators are disclosed in GB 1494496 and GB 873546. In each case, the bite indicator described suffers from the disadvantage that the extent of line movement which can be recorded by the device is extremely limited.

The present invention sets out to provide a simple and relatively inexpensive bite indicator which does not suffer from the disadvantage inherent in presently available bite indicators.

According to the present invention in one aspect, there is provided a bite indicator for a fishing line of a fishing rod which comprises a rotatable member positioned towards the base of a recess within which a rod is to be supported such that, in use, the rotatable member lies in contact with, and is driven by, the line of a rod supported within the recess, the bite indicator being characterised in that the rotatable member is mounted on a spindle which also carries an indicator to provide, on rotation of the member, a visual indication of line movement and the rate thereof.

The recess may be defined by the diverging arms of a bank stick or be formed within a housing within which the rotatable member is located. In the former case, the spindle may be supported for rotation within a tubular bearing housing or bush, the housing or bush being located within a suitably shaped bore formed in one or each diverging arm of a bank stick or by means of a clasp or the like mounted on the bank stick.

According to the present invention, in another aspect, there is provided a bite indicator for a fishing line of a fishing rod which comprises a housing including a recessed support within which a fishing rod can be located and a rotatable member positioned towards the base of the recess such that, in use, the rotatable member lies in contact with and is driven by the line of a rod supported within the recess of the housing, the bite indicator being characterised in that the rotatable member is mounted on a spindle which protrudes through an aperture in one side wall of the housing and carries on its protruding end an indicator which is moved by the spindle to provide a visual indication of line movement and the rate thereof.

The indicator may take the form of an elongate tubular gas filled isotope (e.g. one omitting beta light in semi or total darkness) carried by the spindle with its longitudinal axis inclined to the spindle axis. The longitudinal axis of the isotope tube may lie substantially normal to the rotational axis of the spindle. The isotope may be carried by a wheel or the like rigidly connected to the spindle.

Alternatively, the visual indicator may simply comprise a suitably shaped member whose rotational speed is indicative of the rate of line movement. The indicator may be coated with a fluorescent paint or material to make it visible for night anglers.

The rotatable member may comprise a wheel, globe or disc mounted freely for rotation within bearing assemblies supported from the housing or bank stick. The contacting surface of the rotatable member may comprise or be coated with a friction enhancing material. Alternatively or additionally, the periphery of the member may be formed with a groove capable of receiving and retaining the line.

The rotatable member may be formed with at least one aperture to place a light emissive diode located within the housing periodically in communication with signal transmitting means connected to an audio transducer to provide an audible indication of line movement and the rate thereof. Where several apertures are formed in the rotatable member, they may be equi-spaced. Alternatively, the rotatable member may comprise a boss which carries one or more spaced vanes or a plate so shaped and dimensioned as to enable light from the light emissive diode periodically to communicated with the signal transmitting means.

Line tensioning means may be provided selectively to impose a variable braking force on the line passing therethrough. The line tensioning means may comprise a pad of resilient material which can be moved towards and away from the line respectively to impose a greater or lesser braking force thereupon. The pad of resilient material may define one wall of the recess of the housing. Alternatively, the pad of resilient material may be housed within a casing separably mounted on the housing of the bite indicator such that a fishing line can pass sequentially through a channel at least partially bounded by the pad of resilient material, and the recess of the bite indicator.

The invention will now be described by way of example only, with reference to the accompanying diagrammatic drawings, in which:-

Figure 1 is a side elevational view of a bite indicator in accordance with the present invention;

Figure 2 is an end view partly in section of the bite indicator shown in Figure 1;

Figure 3 is an end view partly in section of a line tensioning device in accordance with the invention;

Figure 4 is an end view of a line tensioning device mounted on a bite indicator in accordance with the invention; and

Figures 5 and 6 are respectively a side view partly in section of a further bite indicator in accordance with the invention and a view taken in the direction of arrow VI of Figure 5.

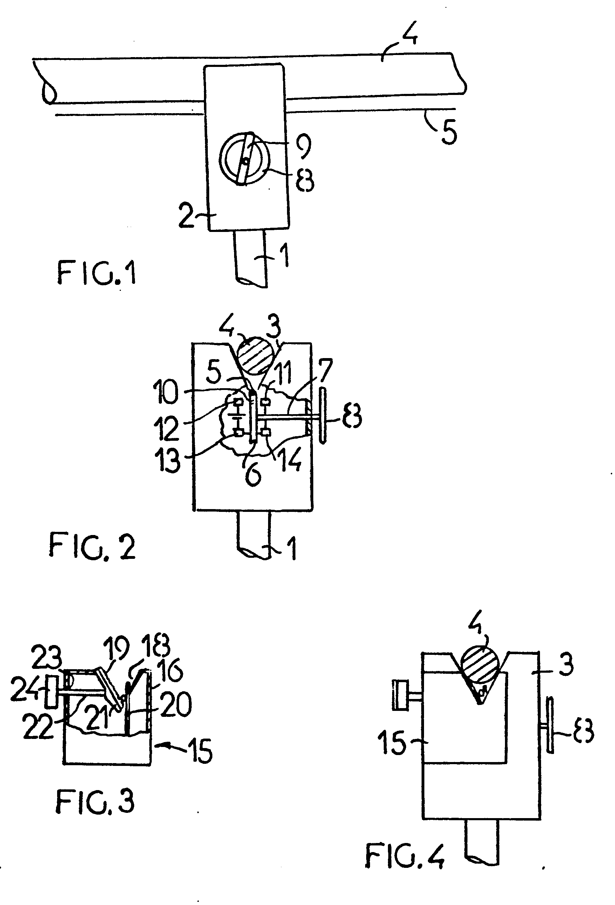

The apparatus illustrated in Figures 1 and 2 comprises a bank stick 1 which supports a housing 2 formed with a "V" shaped recess 3 for receiving and supporting a fishing rod 4 in an inclined or generally horizontal position in a direction generally transverse to a river bank. The reel is to the right in Figure 1 and the rod tip to the left. The housing 2 is supported on the bank stick 1 by any conventional means.

The line of the rod is indicated by reference numeral 5 and is taken along the rod through a series of rings in a conventional manner.

The bite indicator is housed within the housing 2 and includes a grooved wheel 6 mounted on a spindle 7 freely rotatable within a suitable bearing assembly. The wheel 6 is positioned so that when the rod 4 is supported within the recess 3, the line 5 lies within the peripheral groove formed within the rim of the wheel 6. Thus, movements of the line caused for example by a fish taking a bait, are translated into rotational movements of the wheel. The surface of the wheel may be roughened; alternatively or additionally, the wheel rim surface may consist of or be coated with a friction enhancing material.

Rotational members other than that illustrated may be employed.

The spindle 7 protrudes through an aperture formed in one side wall of the housing and carries an annular member 8 on which is mounted a gas-injected tubular isotope 9. One example of a suitable isotope is that sold under the trade name "beta lite". The isotope tube is mounted so that its longitudinal axis lies in a plane normal to the rotational axis of the spindle 7.

It will be appreciated that the aperture through which the spindle 7 protrudes may be positioned within either side wall of the housing; indeed, an aperture may be formed in each side wall so that the isotope can be viewed on the housing side preferred by the angler. In this latter case, the wheel 6 may carry two spindles, one protruding from each side of the housing 2 and each carrying a tubular isotope 9.

As will be seen from Figure 2 of the drawings, the wheel 6 is formed with an aperture 10 and rotates between a light emissive diode 11 and an electrical transistor 12. The components 11, 12 are connected into an electric circuit conditioned to transmit electrical pulses at a frequency dictated by the frequency at which the components are placed in communication with one another by the aperture 10.

The transmitted electrical pulses pass via a buffer amplifier 13 to an audio transducer 14 to provide an audible alarm of line movement.

Separably mounted on the housing 2 is a line tensioning device 15 comprising a casing 16 including a mounting plate which co-operates with a similar mounting plate located on the housing 2 to position a recess 18 formed in the casing in line with and immediately in front of (in the direction of line travel) the recess 3 of the housing 2. Mounted within the casing 16 is a resilient pad 19, e.g. of a foam material, which defines one side wall of the recess 18 of the casing 16. The other side of the recess 18 is defined by an upstanding plate 20. The pad 19 is attached to a backing plate 21 which is acted upon by one end of a threaded bolt 22 to move the pad towards and away from the plate 21. The bolt 22 protrudes through a threaded nut 23 set in one side wall of the casing 16 and carries a hand operated knob 24 for ease of operation. As the line passes through the recess 18, its freedom of movement can be restricted by a controlled braking force imposed through the selected setting of the pad 19.

In an unillustrated embodiment, the line tensioning device 15 is formed integrally with the housing 2.

In use of the bite indicator described, the rod is supported within the recess 3 of the housing 2 as illustrated with the line passing sequentially through the recess 18 of the line tension casing 16 and the recess 3 of the housing 2 and lies in contact with the grooved periphery of the wheel 6. The line tensioning device 15 is therefore located between the housing 2 and the reel of the rod. The degree of freedom of movement of the line leaving the reel is controlled by adjusting the setting of the line tensioning device. Thus, line movement caused by water currents and the like can be accommodated by turning of the knob 24 to move the pad 19 towards or away from the plate 20.

As a fish takes a bait, the line moves from the reel and this line movement is translated into rotational movement of the wheel 6. In turn, this movement causes rotation of the isotope tube 9 to provide a visual indication of both line movement and the rate thereof. Similarly, electrical signals generated through interaction of the light emissive diode 11 and the transistor 12 causes a train of signals to pass to the audio transducer 14 to provide an audible indication of both line movement and the rate thereof.

The tone and volume of the audible signal may be adjusted by the angler. Tone adjustment is advantageous on occasions where an angler is using more than one rod at any given time to provide an immediate indication of which of several baited lines has been taken by a fish. In addition, or alternatively, each of the several bite indicators may include an outlet socket connected through a suitable electrical cable to a master indicator positioned remote from the rods in use. Audio signals emitted by any individual indicator can thus be fed to the master indicator to alert the angler to the fact that a bait has been taken and to identify from which indicator the signals are being transmitted. Thus, an angler does not necessarily have to be in the immediate vicinity of his rod in order to be alerted to a fish taking a bait. Also, an angler is enabled to fish using several rods positioned at various locations along a river bank.

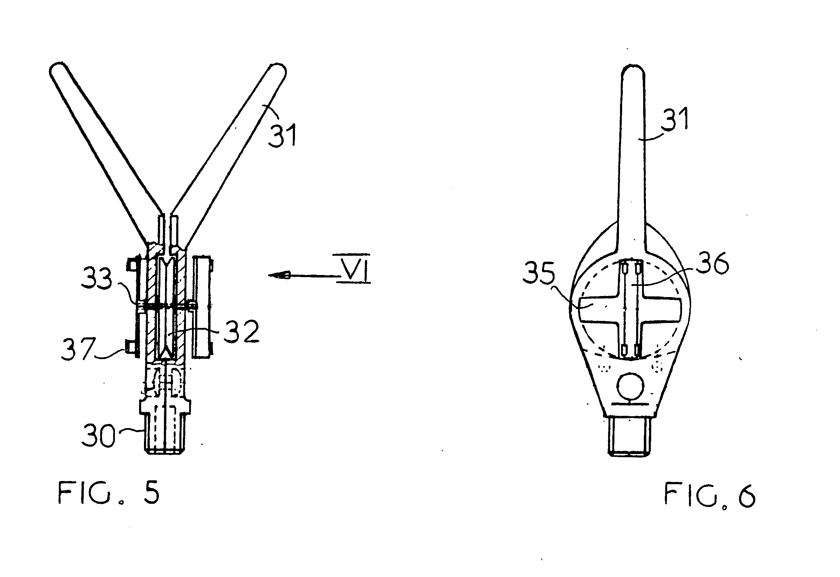

Turning now to the bite indicator illustrated in Figures 5 and 6, the apparatus illustrated includes a housing 30 which is internally threaded at its lower end to receive complementary threading carried by a bank stick on which the indicator is to be located. At its upper end, the housing 30 carries a pair of diverging arms 31 which define a "V" shaped recess for receiving and supporting a fishing rod.

Positioned within the housing 30 is a grooved wheel 32 mounted on a spindle 33 freely rotatable within a suitable bearing surface. The wheel 32 is positioned so that when a rod is supported between the arms 31, the line of the rod lies within the peripheral groove formed within the rim of the wheel 32. Thus, as for the previously described embodiment, movements of the line caused, for example, by a fish taking a bait, are translated into rotational movements of the wheel. The surface of the wheel may be roughened; alternatively or additionally, the wheel rim surface may consist of or be coated with a friction enhancing material.

The spindle 33 protrudes through apertures formed in one side wall of the housing and carry cross-shaped members 35 on one of which is mounted a gas-injected tubular isotope 36. One example of a suitable isotope is that sold under the trade name "beta lite". The isotope tube is mounted so that its longitudinal axis lies in a plane normal to the rotational axis of the spindle 33. The carrying member 35 is designed so that a "beta lite" 36 may be mounted on each carrying member 35 or on one or other of the carrying members.

It is to be understood that the foregoing embodiments are merely exemplary of the invention described and that various modifications may be made thereto without departing from the true scope of the invention.

Thus, in one unillustrated embodiment of the invention, the bite indicator simply comprises the wheel 6, the spindle 7 and the members 8 and 9. In this embodiment, the spindle 7 may, for example, be supported within a tubular bearing housing or bush located within one or each diverging arm of a bank stick; alternatively, the bearing housing or bush may be supported within a clasp, clamp or the like attached to a bank stick such that the line 5 lies in contact with the periphery of the wheel 6. In this simplified arrangement, the need for a housing 3 as such is eliminated thereby providing a relatively inexpensive bite indicator which provides a visual indication of both line movement and the rate thereof.

Claims

1. A bite indicator for a fishing line of a fishing rod, the indicator comprising a rotatable member positioned towards the base of a recess within which a rod is to be supported such that, in use, the rotatable member lies in contact with, and is driven by, the line of a rod supported within the recess, the bite indicator being characterised in that the rotatable member (10; 32) is mounted on a spindle (7) which also carries an indicator (8; 35) to provide, on rotation of the member (10; 32), a visual indication of line movement and the rate thereof.

2. An indicator as claimed in Claim 1, characterised in that the recess is formed within a housing (2) within which the rotatable member (10) is located.

3. An indicator as claimed in Claim 2 characterised in that the spindle (7) is supported for rotation within a tubular bearing housing or bush, the housing or bush being located within a suitably shaped bore formed in one or each diverging arm of a bank stick.

4. A bite indicator for a fishing line of a fishing rod which comprises a housing including a recessed support within which a fishing rod can be located and a rotatable member positioned towards the base of the recess such that, in use, the rotatable member lies in contact with and is driven by the line of a rod supported within the recess of the housing, the bite indicator being characterised in that the rotatable member (10; 32) is mounted on a spindle (7) which protrudes through an aperture in one side wall of the housing (2) and carries on its protruding end a visual indicator (8; 35) which is moved by the spindle (7) to provide a visual indication of line movement and the rate thereof.

5. A bite indicator as claimed in Claim 4 characterised in that the visual indicator comprises tubular gas filled isotope (9; 36) carried by the spindle.

6. A bite indicator as claimed in Claim 5 characterised in that the longitudinal axis of the isotope (9; 36) lies substantially normal to the rotational axis of the spindle (7).

7. A bite indicator as claimed in Claim 5 or Claim 6 characterised in that the isotope (9; 36) is carried by a rotatable member rigidly connected to the spindle.

8. A bite indicator as claimed in Claim 4 characterised in that the visual indicator comprises a suitably shaped member whose rotational speed is indicative of the rate of line movement.

9. A bite indicator as claimed in Claim 8 characterised in that the visual indicator is coated with a fluorescent material to make it visible for night anglers.

10. A bite indicator as claimed in any one of Claims 4 to 9 characterised in that the rotatable member is formed with at least one aperture to place a light emissive diode (11) located within the housing (2) periodically in communication with signal transmitting means (12) connected to an audio transducer (14) to provide an audible indication of line movement and the rate thereof.

FIG.1

FIG. 2

FIG.3

FIG.4

FIG. 6

31

36

35

VI

31

32

33

37

30

FIG. 5

# DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| D,Y | GB-A-873546 (MULCHINOCK) <br> * page 2, line 32 - line 84; figures 1-6 * | 1 | A01K97/12 |
| A | | 4 | |
| D,Y | GB-A-1503596 (DELLAREED LIMITED) <br> * the whole document * | 1 | |
| A | | 2, 3, 10 | |
| D,A | GB-A-1494496 (BAKER) <br> * the whole document * | 1, 4 | |

|  |  |
|---|---|
| | TECHNICAL FIELDS SEARCHED (Int. Cl.4 ) |
| | A01K |

The present search report has been drawn up for all claims

| Place of search | Date of completion of the search | Examiner |
|---|---|---|
| THE HAGUE | 13 JANUARY 1989 | VERDOODT S.J.M. |